# EUROPEAN PATENT APPLICATION

(11) **EP 4 610 174 A1**
(43) Date of publication of application: **03.09.2025**
(21) Application number: 25156257.5
(22) Date of filing: 06.02.2025
(51) Int. Cl.: B64D 37/32, B64D 13/06

(54) **AN AIRCRAFT ENCLOSURE INERTING SYSTEM**

(30) Priority: 29.02.2024 GB 202402889
(71) Applicant: Airbus Operations Limited, Bristol BS34 7PA (GB)
(72) Inventor: EDWARDS, Henry, Bristol, BS34 7PA (GB)
(74) Representative: Abel & Imray LLP

(57) **Abstract**

An aircraft enclosure inerting system (16) has an inerting apparatus (36) which receives air from an inlet (30), separates that air into nitrogen enriched air to be delivered to one or more enclosures (13, 15, 17, 19, 29) of the aircraft (2), and oxygen enriched air. The inerting apparatus (36) comprises at least first and second air separators (42, 44). The first and second air separators (42, 44) are configured differently to one another. In some embodiments one of the air separators (42, 44) is a vortex tube and the other is a membrane-based air separation module. In some embodiments the inerting apparatus (36) has at least two vortex tubes which are configured differently to one another.

## Description

### BACKGROUND OF THE INVENTION

The present disclosure relates to the field of aircraft enclosure inerting systems. It relates particularly, but not exclusively, to inerting systems which can be used to fill the ullage of an aircraft fuel tank with nitrogen enriched air as a fire safety precaution.

Owing to airworthiness requirements, most commercial aircraft require the use of fuel tank inerting systems among a suite of other measures to prevent aircraft fuel tank fires or explosions. The primary purpose of such inerting systems (also referred to as inert gas generation systems) is to reduce the oxygen O2 concentration within the aircraft fuel tank ullage, and hence the ullage flammability, thereby preventing the ability of the ullage to combust. State of the art systems comprise the use of one or more Air Separate Modules (ASMs) arranged in parallel to separate bleed air into nitrogen enriched air (NEA), sometimes called oxygen depleted air, and oxygen enriched air (OEA). The OEA is exhausted overboard from the aircraft whilst the NEA is fed in a controlled manner at predetermined rates into the ullage above the fuel in the aircraft's fuel tank or tanks such that the O2 concentration of the ullage is kept below an upper limit (for instance 12%) during most operating conditions of the aircraft.

Typically, fuel tank inerting systems have different flow rate modes designed to achieve the desired O2 concentration in the fuel tank ullage during three different flight phases: low flow rate used during aircraft climb and cruise, medium flow rate used during approach and slow descent, and high flow rate used during normal descent. Current aircraft enclosure inerting systems use membrane-based ASMs. Bleed air, which is high temperature and pressure bled from an engine or from a separate compressor fed by a ram air channel, is filtered and cooled before being inputted into the ASM(s). Cooling and filtering of the bleed air is important because the ASM contains a membrane, often in the form of a set of hollow fibres, over which the input air passes. The membrane can be clogged if the input air contains contaminants like dust, and degrades too rapidly if subjected to input air above a certain temperature. The membrane of the/each ASM is permeable to oxygen but not to nitrogen, so as the air passes over the membrane much of the oxygen it contains passes through the membrane while the nitrogen continues along it. This separates the air into the NEA and OEA. The NEA can then be regulated into the ullage, while the OEA can be discarded as mentioned.

In order to cater for the different flow rates, some aircraft require a plurality of identically sized membrane based ASMs connected in parallel to ensure sufficient NEA is available at the required purity (i.e. low oxygen content) during high flow rate mode of operation. For low and medium rate modes, this means the system is oversized.

Each ASM takes a portion of the total inlet air and produces a portion of the total NEA. While this approach can provide NEA at the required purities and in the required amounts, such a system architecture is heavy and requires considerable amounts of space to be allocated within the aircraft structure to accommodate the ASMs and supporting components. Increasing the number of ASMs in parallel only compounds this problem. Furthermore, the membranes of NEAs degrade over their service life, therefore the/each NEA must be over-sized so that membrane degradation does not bring its performance below the required level.

An inerting system that relies on using membrane-based ASMs, whether used individually or in parallel, is also complex. This can impact reliability and thus increase maintenance costs and availability of the system as a whole, which in turn increases operator costs. ASMs also often have relatively short service life in comparison to that of an aircraft. As mentioned, ASMs can be damaged if their intake air is too hot, or operated in environments where the air contains high levels of contaminants such as dust or ash. Therefore filtering and cooling is necessary which results in further weight, bulk and expense, and the presence of the cooling apparatus also reduces air flow rate.

An alternative way of producing NEA is through use of a vortex tube. A vortex tube has a chamber into which air is formed into vortex (for instance using vanes and/or by injecting the air tangentially into the chamber). As the air rotates inside the chamber it produces a hotter stream around the outside and a colder stream towards the middle. Vortex tubes are generally used to provide cooling rather than air separation. However, oxygen, being denser than nitrogen, tends to be thrown out into the outer stream, leaving the inner stream in a nitrogen enriched state.

While vortex tubes are generally cheaper, lighter and more robust than ASMs, they are generally less efficient and the NEA they can produce is generally less pure. Accordingly, many problems and trade-offs still exist in the generation of NEA.

The present invention seeks to mitigate one or more of the above-mentioned problems. Alternatively or additionally, the present invention seeks to provide an improved or alternative aircraft enclosure inerting system, aircraft sub-assembly or aircraft.

### SUMMARY OF THE INVENTION

According to a first aspect of the present invention there is provided an aircraft enclosure inerting system comprising:
an inlet;
an inerting apparatus configured to receive air from the inlet and separate that air into nitrogen enriched air and oxygen enriched air;
a first outlet configured for fluid communication with at least one enclosure of the aircraft to supply nitrogen enriched air from the inerting apparatus to the at least one enclosure; and
a second outlet configured to exhaust oxygen enriched air from the inerting apparatus,
wherein the inerting apparatus comprises at least first and second air separators which are configured differently to one another.

With the first and second air separators being configured differently to one another, each separator can be tailored towards different circumstances or requirements. This, in turn, can allow the inerting system to exhibit better performance, reliability and/or versatility. For example, each air separator may be optimised for the individual air flow conditions that it experiences within the inerting apparatus. This, in turn, can allow the inerting system as a whole to be more energy efficient, produce NEA of a given purity at a higher flow rate, and/or produce NEA of a higher purity for a given flow rate. As another example, the two air separators may be configured to provide different advantages over one another, with the inerting system thereby being able to provide both advantages combined and/or being able to provide either advantage as appropriate. For instance, one of the air separators may be optimised to provide high flow rate at the expense of lower purity NEA and the other may be optimised to provide high purity NEA at the expense of flow rate. The inerting system would thus be adaptable to different conditions, being capable of providing different purities of NEA at different flow rates to suit different applications or circumstances (e.g. different flow rate modes as discussed above). An inerting system being adaptable in this way may reduce the need for it to be over-sized as noted above, thereby saving weight and/or bulk.

The first and second air separators may, for example, be configured differently to one another by virtue of having different working principles, having different shapes, having different sizes and/or having different internal structure. For the avoidance of doubt, reference to two air separators being configured differently is intended to relate to the air separators themselves, not their orientation in space or their position within the air flow through the inerting apparatus.

The inlet may be an aperture or an end of a pipe or duct. As an alternative, the inlet may be a grill or a mesh which forms one or more walls of a housing (such as a housing of the inerting apparatus or a housing of the inerting system). Equally, the first outlet and/or the second outlet may be an aperture, an end of a pipe or duct, or a grill or mesh which forms one or more walls of a housing.

The inerting apparatus and/or the entire inerting system may be a self-contained unit, for instance contained within a frame or housing. As an alternative, each may be provided as a collection of components with no discernible boundary surrounding them. For example, different components may be distributed across a length or width of an aircraft.

The second outlet may be configured to exhaust OEA received from each of the air separators. As an alternative, the second outlet may be configured to exhaust OEA received from one or more but less than all of the air separators, with the other separator(s) supplying OEA to a different outlet.

For the avoidance of doubt, reference to nitrogen enriched air and oxygen enriched air is not intended to imply any specific concentration of nitrogen or oxygen. Rather, it is intended to refer to the content of the air relative to its content as received at the inlet.

The inerting apparatus may comprise a third air separator which is configured differently to each of the first and second air separators.

The inerting system having three air separators each configured differently to one another can further improve its performance, reliability and/or versatility for the reasons discussed above.

As an alternative, the aircraft enclosure inerting system may comprise a total of two air separators (the first and the second air separators). As another alternative, the aircraft enclosure inerting system may comprise a third air separator which is configured the same as the first air separator or the second air separator.

Said air separators may be connected together in series.

The air separators being connected in series can allow the separation of air within the inerting apparatus to take place in sequential stages. In contrast, in a system with a single air separator or multiple air separators in parallel, the/each air separator must separate air from its initial oxygen concentration to the required oxygen concentration. With the air separators provided in series, each air separator can be optimised for the specific change in oxygen concentration required at that stage. Instead, or as well, the air separators being provided in series can mean that failure of a single air separator may be compensated for by the other air separator(s), in contrast to arrangements with a single air separator or several in parallel, where failure of the/an air separator can result in air exiting the inerting apparatus with unchanged oxygen levels.

The air separators being configured differently to one another may be particularly advantageous where they are connected in series. With the air separators connected in series the oxygen content and the flow rate of the air destined for the first outlet changes as it moves from one separator to the next. Configuring the air separators differently to one another can allow each air separator to be optimised for the oxygen content and/or flow rate of air that it experiences.

For the avoidance of doubt, reference to said air separators being connected in series relates to their position relative to the flow of air through the inerting apparatus. It is not intended to relate to the special position of the air separators within the inerting apparatus.

Reference to said air separators (i.e. the first and second air separators, or the first, second and third air separators) being connected in series is not intended to exclude the possibility of a further air separator being connected in parallel with one or more of said air separators. For instance, an inerting apparatus may comprise first, second and third air separators with a fourth separator being provided in parallel to the other three, or in parallel with only one or two of the three.

At least one of said air separators may be a vortex tube.

Vortex tubes can be relatively small, low-maintenance, light and/or inexpensive in comparison to other air separators, and/or can allow relatively high flow rates. Use of a vortex tube as at least one of said air separators may therefore allow the inerting system as a whole to have corresponding advantages.

At least one of said air separators may be a membrane-based air separation module.

Membrane-based air separation modules (ASMs) can provide particularly thorough air separation, thereby enabling the inerting system as a whole to provide beneficially pure NEA.

The membrane of the air separation module may be a hollow fibre membrane, for example.

The vortex tube may be positioned upstream of the air separation module.

Providing a vortex tube upstream of a membrane-based ASM may place those air separators in conditions more suited to their respective strengths. For example, an upstream vortex tube can provide a significant proportion of the required air separation, at relatively little cost in terms of flow rate, physical size, monetary cost, reliability etc, with the downstream ASM merely needing to refine the purity of the NEA to the required level. The use of the vortex tubes for some of the separation may allow higher flow rates to be provided, and for the overall cost, size etc of the inerting system to be lower, while the use of an ASM can ensure that NEA is provided at the required purity. With less burden falling to the air separation module, its effect on the overall flow rate may be lower, and it (and thus the inerting system as a whole) may have a longer service life.

Instead or as well, providing a vortex tube upstream of a membrane-based ASM may allow the vortex tube to cool the air before it enters the ASM. This may reduce or eliminate the possibility of that air being hot enough to overly degrade the membrane of the ASM.

Whilst such an arrangement may be beneficial in many circumstances, the present invention may nonetheless be utilised with a membrane-based ASM positioned upstream of a vortex tube. This may have utility, for example where the vortex tube is used as a backup option in case of failure of the ASM. The ASM may be sized to provide sufficient flow rate, but the vortex tube may function as a backup option with less of a penalty in terms of flow rathe through the inerting system as a whole (and with less of a penalty in terms of weight, cost, expense and the like).

The inerting apparatus may comprise at least two vortex tubes positioned upstream of the air separation module.

The use of at least two vortex tubes, for instance three or more vortex tubes, may magnify one or more of the advantages discussed above.

Where the inerting apparatus comprises at least two vortex tubes upstream of the ASM, one or both of those vortex tubes may form one or more of the first air separator, the second air separator and the third air separator (where present).

Each air separator of the inerting system may be a vortex tube.

The use of a vortex tube for each air separator can advantageously eliminate the disadvantages of other air separators (for instance the size, weight, cost, reduction in flow rate or maintenance requirements associated with membrane-based ASMs).

Said vortex tubes may differ from one another in size.

The size of a vortex tube is a key variable affecting its performance (i.e. how the flow rate of air through the vortex tube affects the level of separation it can provide). Accordingly, the configurations of the vortex tubes differing in terms of their size may allow their performance to be adjusted to a beneficially significant extent. Instead or as well, using different sizes of vortex tube may be an advantageously straightforward and repeatable way of varying their configuration.

As an alternative, said vortex tubes may differ from one another in internal structure. For example, the vortex tubes may have different numbers and/or different shapes of flow-directing vanes (for instance within a plenum chamber). As another example, the vortex tubes may have differing shapes of chamber wall (for instance one may be cylindrical and another conical, or one may be more sharply tapered than another).

Said vortex tubes may differ from one another in diameter.

Diameter is a particularly important variable affecting the performance of a vortex tube. Thus, the configurations of the vortex tubes differing in terms of their size may allow their performance to be adjusted (and the associated benefits provided) to a particularly significant extent. Instead or as well, using different diameters of vortex tube may be an advantageously straightforward and repeatable way of varying their configuration.

Instead of or as well as differing in terms of diameter, the vortex tubes may differ from one another in terms of size by virtue of having differing lengths.

Said vortex tubes may be arranged in order of decreasing diameter from the inlet.

Generally speaking, narrower vortex tubes perform better at lower flow rates. Accordingly, in this arrangement the vortex tubes which receive less air flow can have a correspondingly reduced diameter. Thus, each vortex tube can work more effectively and the performance of the inerting system as a whole can be improved.

The aircraft enclosure inerting system may further comprise a selectively openable bypass passage arranged to receive air from at least one of the air separators and allow that air to bypass at least one other of the air separators.

The ability to bypass at least one of the separators can allow the inerting system to be more versatile, allowing said separator(s) to be used or bypassed according to the specific requirements at the time. For example, a separator may be bypassed for the sake of improving flow rate in circumstances where less pure NEA is satisfactory. As another example, the bypass passage can allow a malfunctioning air separator to be bypassed so as to reduce its effect on the NEA produced.

The bypass passage may be a stand-alone duct, a plenum or a space between a casing and a component (such as an air separator, for instance an air separator being bypassed).

The bypass passage may be selectively openable using one or more valves, for instance a valve at an inlet of the bypass passage to prevent air entering it and/or a valve at an outlet of the bypass passage to prevent air exiting it. Such a valve may for example be selectively operable using an actuator, or automatically openable as a result of a change in pressure in the manner of a pressure release valve or the like.

As an alternative to a bypass passage, all said air separators may be permanently connected to one another in a particular configuration (for instance all of them in series, all of them in parallel, or a mix of both).

The bypass passage may be arranged to allow air to bypass at least the air separation module.

With ASMs having a finite service life, the ability to bypass the ASM can extend the service life of the inerting system by only using the ASM (and affecting its remaining service life) when needed. Instead, or as well, with ASMs being less reliable than some alternatives, the ability to bypass the ASM may allow the inerting system to react more effectively to the more common potential failure modes of the system as a whole (for instance by bypassing a blocked ASM so as to allow flow of NEA to continue, albeit potentially at reduced purity).

The bypass passage may be configured to receive substantially all the nitrogen enriched air produced by the inerting apparatus when the bypass passage is open. As an alternative, the bypass passage may be a bleed passage that is configured to receive only a portion of the nitrogen enriched air produced by the inerting apparatus when the bypass passage is open.

The bypass passage may be configured to allow substantially no air flow or no air flow therethrough when the bypass passage is closed.

The bypass passage may be arranged to deliver air to the first outlet.

With the bypass passage delivering air to the first air outlet, the inerting system can vary the purity of NEA delivered (and perhaps the flow rate at which it is delivered) to the same location. The inerting system can then, for example, maintain the purity of NEA within an enclosure connected to the first outlet by selectively opening and closing the bypass passage according to detected changes in O2 concentration within the enclosure.

The aircraft enclosure inerting system may further comprise a third outlet configured to exhaust partially nitrogen enriched air from the inerting system, the bypass passage being arranged when open to direct air to the third outlet.

This can allow the inerting system to supply NEA in two different conditions (e.g. purity and/or flow rate) to two different locations, as desired. For example the first outlet may be a high purity outlet connected to a first space and the third outlet may be a low purity outlet connected to a second space, with the inerting system being configured to supply high purity NEA to the first space when the bypass passage is closed and supply lower purity NEA to the second space when the bypass passage is open.

The aircraft enclosure inerting system may be configured to produce nitrogen enriched air which as an oxygen concentration of 12% or less, for instance 10% or less, 5% or less or 2% or less. The inerting system may be configured to supply said nitrogen enriched air to the first outlet.

Reference to "partially nitrogen enriched air" is not intended to imply a specific proportion of nitrogen or oxygen. Rather, the term is intended to refer to air which has a lower percentage oxygen than the air entering the inlet, but a higher percentage oxygen than the air that exits through the first outlet (or equally, air which has a higher percentage nitrogen than the air entering the inlet, but a lower percentage nitrogen than the air that exits through the first outlet.

According to a second aspect of the present invention there is provided an aircraft enclosure inerting system comprising:
an inlet;
an inerting apparatus configured to receive air from the inlet and separate that air into nitrogen enriched air and oxygen enriched air;
a first outlet configured for fluid communication with at least one enclosure of the aircraft to supply nitrogen enriched air from the inerting apparatus to the at least one enclosure; and
a second outlet configured to exhaust oxygen enriched air from the inerting apparatus,
wherein the inerting apparatus comprises at least a vortex tube and a membrane-based air separation module.

The inerting system having both a vortex tube and a membrane-based air separation module can allow it to provide one or more of the advantages of each, in combination or as alternatives according to the situation in question, as discussed above.

For the avoidance of doubt, the vortex tube and the membrane-based air separation module may be connected to one another in series, for instance with the vortex tube positioned upstream of the air separation module, as discussed above.

According to a third aspect of the present invention there is provided an aircraft enclosure inerting system comprising:
an inlet;
an inerting apparatus configured to receive air from the inlet and separate that air into nitrogen enriched air and oxygen enriched air;
a first outlet configured for fluid communication with at least one enclosure of the aircraft to supply nitrogen enriched air from the inerting apparatus to the at least one enclosure; and
a second outlet configured to exhaust oxygen enriched air from the inerting apparatus,
wherein the inerting apparatus comprises at least two vortex tubes which are configured differently to one another.

With the vortex tubes configured differently to one another, each can be tailored to the specific flow conditions that it experiences within the inerting apparatus, thereby allowing the performance of the inerting system to be improved as discussed above.

For the avoidance of doubt, the vortex tubes may be positioned in series and/or may be configured differently to one another by virtue of having different diameters, as discussed above.

According to a fourth aspect of the present invention there is provided an aircraft sub-assembly comprising an aircraft enclosure inerting system according to the first, second or third aspect of the invention, and the at least one enclosure.

For the avoidance of doubt, the term "sub-assembly" is used to refer to a collection of components. It is not intended to require those components to be assembled in any particular order in the production of an aircraft.

The inlet of the inerting system may be connected to an air source.

The air source may be a bleed passage leading from an engine. This may be beneficial in allowing air to be supplied at relatively high pressure without the need for a separate compressor (with the associated weight and bulk).

The air source may be an ambient air compressor, for instance which is configured to receive air from a ram air channel. This may be beneficial in that the air received by the inlet may be cooler than if that air was bled from an engine, the cooler air having reduced need of additional cooling in order to bring it down to a temperature which can be withstood by the air separators.

The air source may be a cabin air exhaust. This may be beneficial in that it may avoid the need for a dedicated air supply to be provided (since a cabin air exhaust is generally provided in an aircraft as part of its HVAC system. Such a dedicated air supply may have a detrimental effect on thrust (for instance in the case of an air bleed from an engine) or aerodynamics (in the case of an ambient air compressor where the intake of air can interrupt the smooth flow of air over the aircraft).

It may be that no cooling apparatus is provided between the air source and the vortex tube or vortex tubes.

The cooling effect provided by the vortex tubes may bring the air down to temperatures which can be withstood by the components downstream thereof (for instance an ASM, where present) without the need of further cooling. Eliminating the cooling apparatus can have a beneficial effect on the flow rate through the inerting apparatus (since cooling apparatus such as heat exchangers generally create a flow restriction), and/or the size, weight, power consumption and/or cost of the inerting system as a whole.

The aircraft sub-assembly may further comprise air drying apparatus provided downstream of the air source.

Removing moisture from the air can improve the performance of the air separators, for instance by reducing the risk of condensation. This may be of particular benefit where the air source is a cabin air exhaust, or where the air source is an ambient air compressor and the aircraft is flying at low altitude in humid conditions.

The air drying apparatus may be part of the aircraft enclosure inerting system, for example.

The at least one enclosure may include a fuel tank of the aircraft.

Instead or as well, the at least one enclosure may include an enclosure containing a fuel line.

The inerting system may thereby act to eliminate the risk of fires starting inside a fuel-containing component.

Where the at least one enclosure includes an enclosure containing a fuel line, said fuel line may be part of a fuel manifold.

The at least one enclosure may include an enclosure containing power electronics of the aircraft.

The inerting system may thereby act to eliminate the risk of fires starting at the power electronics.

The at least one enclosure may include a storage tank and/or a containment enclosure of a fire extinguishing system of the aircraft.

The inerting system may thereby allow the fire extinguishing system to operate without the need for halon gas or the like (which has environmental impact, and adds to the weight of the aircraft). Instead or as well, the fire extinguishing system being fed by the inerting apparatus may allow it to be fed continuously or replenished while still in the air, thereby allowing it to act for longer periods of time (for instance to first extinguish the fire and then to hold down the oxygen concentration in the enclosure so as to prevent re-ignition).

Where the at least one enclosure includes a storage tank of a fire extinguishing system the storage tank may be a pressure vessel for containing compressed gas.

A containment enclosure of a fire extinguishing system may be considered to be an enclosed space within which the fire extinguishing system is configured to extinguish fires. For instance, where the fire extinguisher is configured to extinguish fires in an enclosed section of a cargo hold, that section of cargo hold may form the containment enclosure.

The at least one enclosure may include an engine housing, a part of an engine housing and/or an engine pylon.

The or each enclosure of the at least one enclosure may be substantially entirely enclosed. This is not intended to exclude the possibility of the or each enclosure being vented or selectively ventable (for instance to ambient conditions as a pressure equalisation measure).

According to a fifth aspect of the present invention there is provided an aircraft comprising an aircraft enclosure inerting system according to the first, second or third aspect of the invention and/or a sub-assembly according to the fourth aspect of the invention.

It will of course be appreciated that features described in relation to one aspect of the present invention may be incorporated into other aspects of the present invention.

The following clauses form part of the present disclosure. Features described in relation to one aspect of the present invention may be incorporated into any of the clauses set out below, as appropriate, and vice versa.
Clause 1. An aircraft enclosure inerting system comprising:
   an inlet;
   an inerting apparatus configured to receive air from the inlet and separate that air into nitrogen enriched air and oxygen enriched air;
   a first outlet configured for fluid communication with at least one enclosure of the aircraft to supply nitrogen enriched air from the inerting apparatus to the at least one enclosure; and
   a second outlet configured to exhaust oxygen enriched air from the inerting apparatus, wherein the inerting apparatus comprises at least first and second air separators which are configured differently to one another.
Clause 2. An aircraft enclosure inerting system according to Clause 1 wherein the inerting apparatus comprises a third air separator which is configured differently to each of the first and second air separators.
Clause 3. An aircraft enclosure inerting system according to Clause 1 or Clause 2 wherein said air separators are connected together in series.
Clause 4. An aircraft enclosure inerting system according to any preceding Clause wherein at least one of said air separators is a vortex tube.
Clause 5. An aircraft enclosure inerting system according to any preceding Clause wherein at least one of said air separators is a membrane-based air separation module.
Clause 6. An aircraft enclosure inerting system according to Clause 5, incorporating Clauses 3 and 4, wherein the vortex tube is positioned upstream of the air separation module.
Clause 7. An aircraft enclosure inerting system according to Clause 6 wherein the inerting apparatus comprises at least two vortex tubes positioned upstream of the air separation module.
Clause 8. An aircraft enclosure inerting system according to Clause 4 wherein each air separator of the inerting system is a vortex tube.
Clause 9. An aircraft enclosure inerting system according to Clause 7 or Clause 8 wherein said vortex tubes differ from one another in size.
Clause 10. An aircraft enclosure inerting system according to Clause 6 wherein said vortex tubes differ from one another in diameter.
Clause 11. An aircraft enclosure inerting system according to Clause 7, incorporating Clause 3, wherein said vortex tubes are arranged in order of decreasing diameter from the inlet.
Clause 12. An aircraft enclosure inerting system according to any preceding Clause further comprising a selectively openable bypass passage arranged to receive air from at least one of the air separators and allow that air to bypass at least one other of the air separators.
Clause 13. An aircraft enclosure inerting system according to Clause 12, incorporating Clause 5, wherein the bypass passage is arranged to allow air to bypass at least the air separation module.
Clause 14. An aircraft enclosure inerting system according to Clause 12 or 13 wherein the bypass passage is arranged to deliver air to the first outlet.
Clause 15. An aircraft enclosure inerting system according to Clause 12 or 13 further comprising a third outlet configured to exhaust partially nitrogen enriched air from the inerting system, the bypass passage being arranged when open to direct air to the third outlet.
Clause 16. An aircraft enclosure inerting system comprising:
   an inlet;
   an inerting apparatus configured to receive air from the inlet and separate that air into nitrogen enriched air and oxygen enriched air;
   a first outlet configured for fluid communication with at least one enclosure of the aircraft to supply nitrogen enriched air from the inerting apparatus to the at least one enclosure; and
   a second outlet configured to exhaust oxygen enriched air from the inerting apparatus,
   wherein the inerting apparatus comprises at least a vortex tube and a membrane-based air separation module.
Clause 17. An aircraft enclosure inerting system comprising:
   an inlet;
   an inerting apparatus configured to receive air from the inlet and separate that air into nitrogen enriched air and oxygen enriched air;
   a first outlet configured for fluid communication with at least one enclosure of the aircraft to supply nitrogen enriched air from the inerting apparatus to the at least one enclosure; and
   a second outlet configured to exhaust oxygen enriched air from the inerting apparatus, wherein the inerting apparatus comprises at least two vortex tubes which are configured differently to one another.
Clause 18. An aircraft sub-assembly comprising an aircraft enclosure inerting system according to any preceding Clause, and the at least one enclosure.
Clause 19. An aircraft sub-assembly according to Clause 18 wherein the inlet of the aircraft enclosure inerting system is connected to an air source.
Clause 20. An aircraft sub-assembly according to Clause 19, incorporating Clause 4 or Clause 17, wherein no cooling apparatus is provided between the air source and the vortex tube or vortex tubes.
Clause 21. An aircraft sub-assembly according to Clause 19 or 20 further comprising air drying apparatus provided downstream of the air source.
Clause 22. An aircraft sub-assembly according to any one of Clauses 18 to 21 wherein the at least one enclosure includes a fuel tank of the aircraft.
Clause 23. An aircraft sub-assembly according to any one of Clauses 18 to 22 wherein the at least one enclosure includes an enclosure containing a fuel line.
Clause 24. An aircraft sub-assembly according to any one of Clauses 18 to 23 wherein the at least one enclosure includes an enclosure containing power electronics of the aircraft.
Clause 25. An aircraft sub-assembly according to any one of Clauses 18 to 24 wherein the at least one enclosure includes a storage tank and/or a containment enclosure of a fire extinguishing system of the aircraft.
Clause 26. An aircraft comprising an aircraft enclosure inerting system according to any one of Clauses 1 to 17 and/or a sub-assembly according to any one of Clauses 18 to 25.

### DESCRIPTION OF THE DRAWINGS

Embodiments of the present invention will now be described by way of example only with reference to the accompanying schematic drawings of which:
Figure 1 shows a perspective view of an aircraft according to a first embodiment of the invention;
Figure 2 shows a schematic of a sub-assembly which comprises an inerting system of the aircraft of Figure 1;
Figure 3 shows a simplified cross-sectional view of a vortex tube of the inerting system shown in Figure 2;
Figure 4 shows a schematic of an inerting system according to a second embodiment of the invention;
Figure 5 shows a schematic of an inerting system according to a third embodiment of the invention; and
Figure 6 shows a schematic of an inerting system according to a fourth embodiment of the invention.

### DETAILED DESCRIPTION

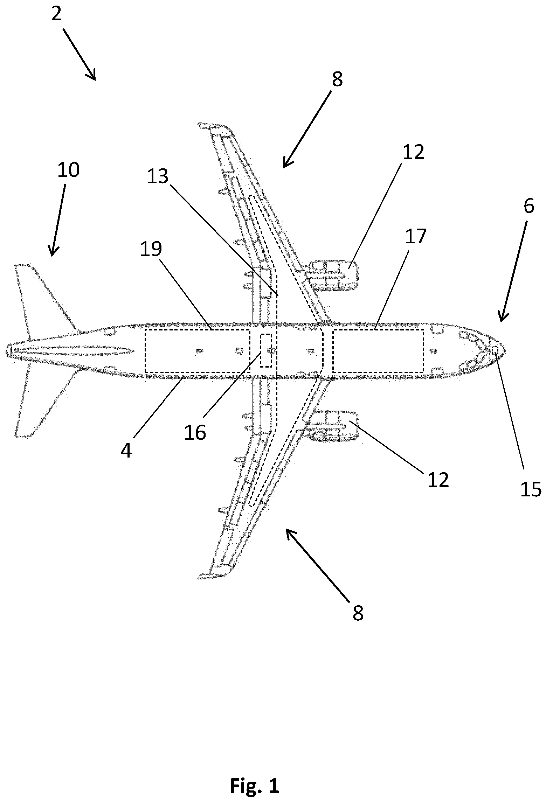

Figure 1 shows an aircraft 2 according to an embodiment of the invention. It has a fuselage 4 with a nose 6, two wings 8 and a tail 10. Each wing 8 extends from the fuselage 4 in a spanwise direction and supports an engine 12 part way along its spanwise length. An enclosure in the form of a fuel tank 13 extends inside the wings 8 and through the fuselage 4 therebetween. The nose 6 contains another enclosure 15, which in this case contains some of the power electronics of the aircraft 2. Also positioned within the fuselage is a cargo bay made up of a fore enclosure 17 and an aft enclosure 19. The aircraft 2 also has an inerting system 16 which is arranged to provide NEA to each of the enclosures 13, 15, 17, 19 as discussed below.

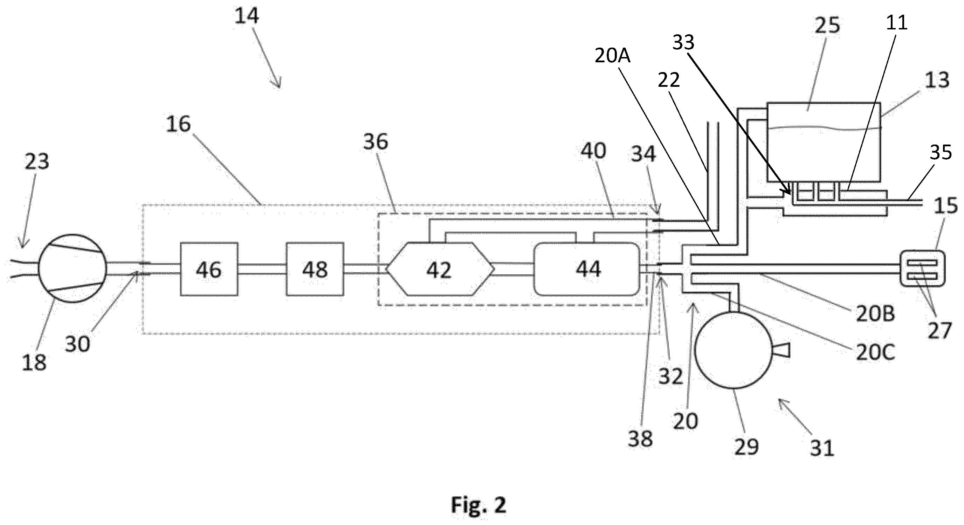

Figure 2 shows a sub-assembly 14 of the aircraft 2 which comprises its inerting system 16 as well as several of the components mentioned above. The sub-assembly 14 will now be described with reference to Figure 2 in combination with Figure 1. The sub-assembly 14 includes an air source in the form of a compressor 18 which draws in ambient air through a ram air channel 23. The sub-assembly 14 also includes the inerting system 16, some ducting 20, an exhaust duct 22, the fuel tank 13, the power electronics enclosure 15 and a fire extinguishing system 31. The ducting 20 has a branch 20A which extends to the fuel tank 13 (more particularly the ullage 25 above the fuel level) and also to an enclosure 11 which houses a fuel manifold 33 and part of a further fuel line 35 extending from the fuel manifold 33. The ducting 20 also has a branch 20B which extends to the housing 15 containing power electronics 27, and a branch 20C which extends to a storage tank 29 of the fire extinguishing system 31. The exhaust duct 22 leads to an outlet (not visible) in the skin of the aircraft 2 through which air can be ejected from the aircraft 2.

In the present embodiment the sub-assembly comprises enclosures 13, 15, the tank 29 of the fire extinguishing system 31 forms another enclosure of the sub-assembly 14 and the enclosure 11 forms another. The fire extinguishing system 31 extends into the fore and aft enclosures 17, 19 of the cargo bay of the aircraft 2 and each of these forms an additional enclosure within the meaning of the present invention (in that each forms a containment enclosure of the fire extinguishing system 31). However, enclosures 17, 19 have been omitted from Figure 2.

The inerting system 16 has an inlet 30 connected to the air source 18, a first outlet 32 connected to the ducting 20 and a second outlet 34 connected to the exhaust duct 22. The inerting system 16 also has an inerting apparatus 36 which is configured to receive air from the inlet 30 and separate that air into nitrogen enriched air (NEA) and oxygen enriched air (OEA).

The first outlet 32 is configured to receive the NEA from the inerting apparatus 36 through ducting 38, and exhaust it from the inerting system 16 into ducting 20, whereupon it can be supplied to the enclosure 11 and fuel tank 13, the power electronics enclosure 15 and/or the fire extinguishing system 31 through respective branches 20A, 20B, 20C as needed. The second outlet 34 is configured to receive the OEA from the inerting apparatus 36 through ducting 40, and exhaust it from the inerting system 16 into exhaust duct 22.

The inerting apparatus 36 of the inerting system 16 has a first air separator 42 in the form of a vortex tube and a second air separator 44 in the form of a membrane-based air separation module (ASM). In this case the two air separators 42, 44 are connected to one another in series, with the vortex tube 42 being upstream of the ASM 44 (or equally, with the ASM 44 being downstream of the vortex tube 42).

The first and second air separators 42, 44 each receive a flow of air and separate that air into a stream which contains a smaller percentage of oxygen and a stream which contains a greater percentage of oxygen. In this case the first air separator 42 receives air from the air source 18 and separates it into a partially nitrogen enriched stream (i.e. a stream of NEA which has relatively low purity) and a partially oxygen enriched stream (i.e. a stream of OEA with relatively low percentage oxygen). The second air separator 44 receives the partially nitrogen enriched air from the first air separator 42 and separates it into NEA with a higher purity, and more OEA. The NEA from the second air separator is received by the first outlet 32 and passes into the ducting 20, while the OEA from the first and second air separators 42, 44 combines and exits the inerting apparatus 16 into the exhaust duct 22 through the second outlet 34.

In this embodiment the inerting apparatus 16 also has a cooling apparatus 46 followed by a set of filters 48, located upstream of the two air separators 42, 44. The cooling apparatus 46 of this embodiment takes the form of a heat exchanger, and acts to cool the air received from the compressor 18 (which is hot due to having been compressed) so that it does not damage the other components of the inerting system 16. The set of filters 48 filters the cooled air to remove particulate matter which may damage or clog one of the air separators 42, 44.

As noted above, in this embodiment the first air separator 42 is a vortex tube and the second air separator 44 is an ASM. The ASM 44 is of conventional design, having a hollow fibre membrane (not visible) which is permeable to oxygen but not nitrogen as would be familiar to the person skilled in the art. The ASM 44 will therefore not be described in detail.

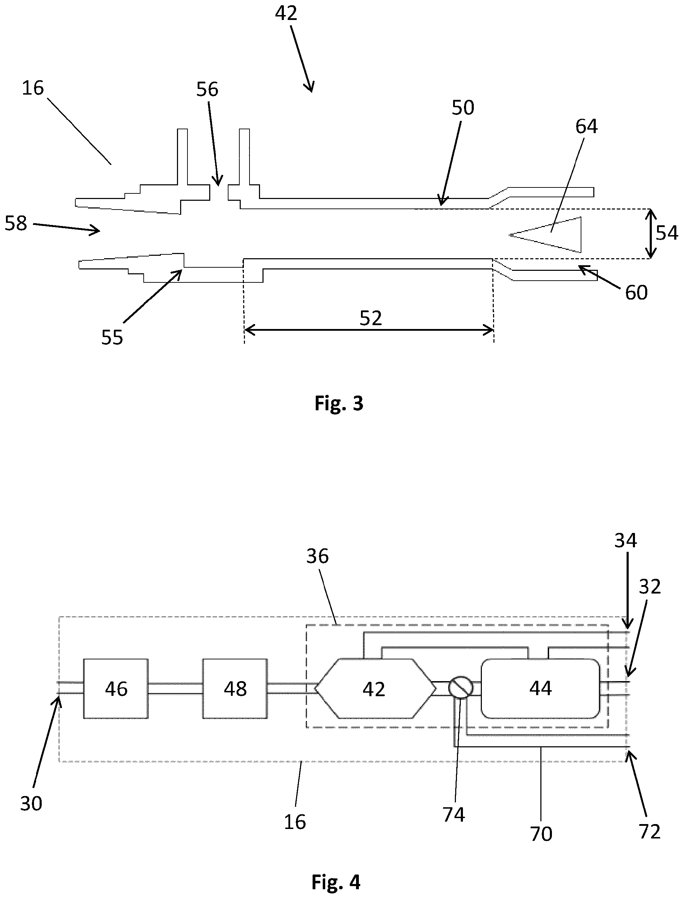

The vortex tube 42 is shown schematically in Figure 3, which will now be referred to in combination with Figures 1 and 2. The vortex tube 42 has a notional length 52 and diameter 54 defined by a chamber 50. In this case the chamber 50 is cylindrical therefore the diameter of the chamber 50 is the same along its length as the notional diameter 54 of the vortex tube. In other embodiments however the chamber 50 may be tapered, whereupon the notional diameter of the vortex tube 42 may be the maximum diameter of the chamber 50.

The chamber 50 has a plenum chamber 55 in which incoming flow is manipulated. The plenum chamber 55 is fed by an inlet 56 which in this case takes the form of a tangential inlet which imparts swirl into air flow entering the chamber 50. In other embodiments the inlet may take a different form, for instance an axial inlet where swirl is imparted by a set of helical vanes.

The vortex tube 42 has an inner outlet 58 and an outer outlet 60. In this embodiment the inner outlet 58 takes the form of a gradually widening aperture, and the outer outlet 60 takes the form of an annular passageway positioned circumferentially around a conical projection 62.

In use, air enters the plenum chamber 55 through the tangential inlet 56, which imparts swirl to the air as mentioned above. Inside the plenum chamber the air is accelerated, its swirl angle is adjusted, and it is fed into the chamber 50. As the air swirls within the chamber 50, it separates into an outer vortex travelling helically in one direction (to the right from the perspective of Figure 3) and an inner vortex travelling in the other direction (to the left from the perspective of Figure 3), with both vortices rotating in the same direction.

The rotation of the air in the two vortices has the effect of throwing the heavier gasses outwards into the outer vortex, with lighter gasses remaining in (or being displaced into) the inner vortex. With oxygen being heavier than nitrogen, the oxygen tends to be thrown out into the outer vortex while the nitrogen tends to remain in the inner vortex. Accordingly, the inner vortex is made up of NEA and the outer vortex is made up of OEA. NEA in the inner vortex exits the chamber 50 through the inner outlet 58, whereupon in this embodiment it is fed to the ASM 44. OEA in the outer vortex exits the chamber 50 through the outer outlet 60, whereupon it is directed towards the second outlet 34 of the inerting system 16.

Heavier gasses being thrown out from the inner vortex and into the outer vortex also has the effect of expanding the air in the inner vortex and compressing the air in the outer vortex. This has the effect of cooling the NEA in the inner vortex and heating the OEA in the outer vortex.

In this particular embodiment, the position of the conical projection 62 is movable axially so as to vary the cross sectional area of the outer outlet 60. Changing the cross sectional area of the outer outlet 60 has the effect of altering the proportion of air which exits through that outlet 60 rather than the inner outlet 58, which affects the relative sizes of the inner and outer vortices. This, in turn, affects the degree of air separation (and heating/cooling) performed by the vortex tube 42. The conical projection 62 thus functions as a control valve.

Use of the inerting system 16 will now be described with continued reference to Figures 1 to 3. The inerting system 16 may be in constant use, with excess NEA being ejected from the aircraft (for instance through pressure-balancing vents open to the outside) or stored for future use, or the inerting system 16 may be used intermittently when needed.

When the inerting system 16 is in use, air is drawn into the aircraft 2 through the ram air channel 23 by the compressor 18, and is fed into the inerting system 16 at the inlet 30. The air, hot from compression, is then cooled in the heat exchanger 46 to bring its temperature down below the point at which it could damage the inerting system 16. The cooled air then passes into through the filters 48 and into the first air separator 42 (the vortex tube). The air is then separated as described above. The relatively impure NEA from the vortex tube 42 then passes to the second air separator 44 (i.e. the ASM), while the OEA from the vortex tube 42 is directed towards the second outlet 34 by ducting 40.

The partially nitrogen enriched air received by the ASM 44 from the vortex tube 42 is then separated further, forming NEA of the required purity along with a second stream of OEA (which may, for the avoidance of doubt, have a different concentration of oxygen to the OEA produced by the vortex tube). The NEA passes from the ASM 44 to the first outlet 32 through ducting 38, while the two streams of OEA are combined in ducting 40, exit the inerting system 16 through the second outlet 34 and are ejected from the aircraft 2 through the exhaust duct 22.

Upon exiting the inerting system 16 through the first outlet 32, the NEA passes along the ducting 20, through one or more of the branches 20A, 20B, 20C as needed. The ducting 20 may include a valve to direct the NEA to one specific branch 20A, 20B, 20C as required, or all the branches may be open at which point the flow of NEA through the branches may be determined by the relative pressures in the fuel tank 13, power electronics enclosure 15 and tank 29.

A second embodiment of the invention will now be described with reference to Figure 4, in combination with Figures 1 to 3. The second embodiment is similar to the first embodiment, therefore only the differences will be described. It is to be noted that corresponding reference numerals denote corresponding features.

While the first and second separators 42, 44 of this embodiment are connected to one another in series, as with the first embodiment, in the second embodiment the inerting system 16 also has a bypass passage 70 and a third outlet 72. The bypass passage 70 is connected in between the first and second air separators 42, 44 at an electronically-controllable valve 74 at its inlet.

The bypass passage 70 is selectively openable by opening valve the 72. With the valve 74 open, all the NEA exiting the vortex tube 42 is directed into the bypass passage. The bypass passage bypasses the ASM 44, delivering the NEA to the third outlet 72. The third outlet 72 can therefore exhaust partially nitrogen enriched air (i.e. NEA of relatively low purity) out of the inerting system 16. The partially nitrogen enriched air can then be taken by ducting (not shown) to one or more of the enclosures 11, 13, 15, 29 (and 17, 19 when the fire extinguishing system 31 is in use) in generally the same manner as NEA from the ASM 44 passing down ducting 20, and/or can be taken to other locations in the aircraft 2.

In the present embodiment, with the valve 74 open the bypass passage 70 receives substantially all the NEA produced by the inerting apparatus 36 (more particularly produced by the vortex tube 42) since no air passes through the ASM. In other embodiments, however, with the valve 74 open the bypass passage may only receive a fraction of the NEA produced by the vortex tube 42, and thus a fraction of the NEA produced by the inerting apparatus 30, with the remainder of the NEA from the vortex tube passing through the ASM 44 and being separated further.

It is noteworthy that in the present embodiment the bypass passage 70 delivers NEA to the third outlet 72. In a modification of this embodiment, the bypass passage 70 may reconnect downstream of the ASM and thus supply NEA to the first outlet 32. In that modification the first outlet 32 would always supply all the NEA from the inerting system 16, at two different levels of purity depending on whether the valve 74 was open or closed.

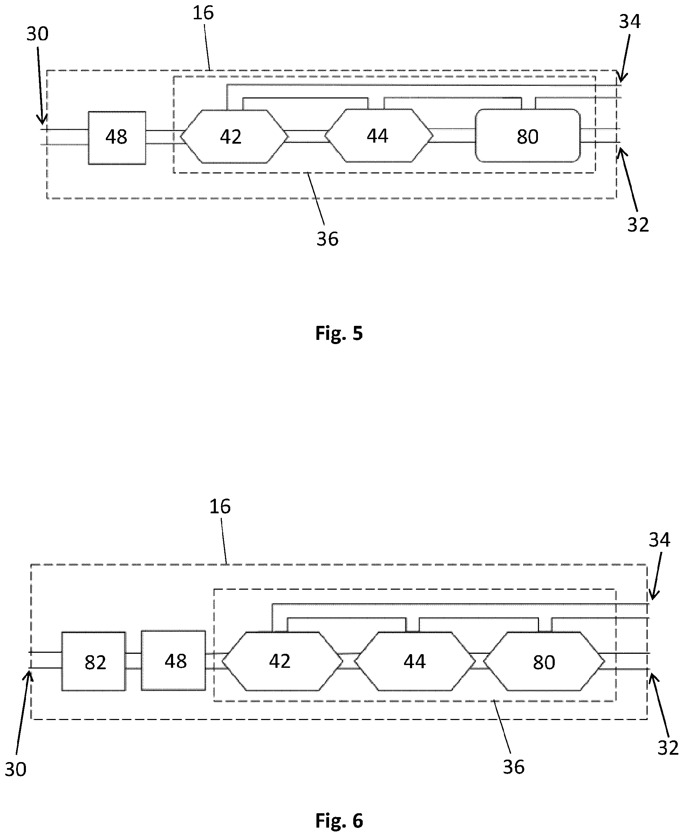

A third embodiment of the invention will now be described with reference to Figure 5, in combination with Figures 1 to 4. The third embodiment is similar to the first embodiment, therefore only the differences will be described and corresponding reference numerals will be used to denote corresponding features.

Is has already been noted above that it is often necessary to cool the air received by the inerting system 16, and that vortex tubes can have a cooling effect. The third embodiment utilises the cooling effect of vortex tubes in place of a separate heat exchanger. There is no cooling apparatus provided between the air source and the vortex tube which forms the first air separator 42, either in the inerting system 16 or upstream of it.

The third embodiment also differs from the first embodiment in that it has three air separators - a first air separator 42 in the form of a vortex tube (as with the first embodiment), a second air separator 44 also in the form of another vortex tube, and a third air separator 80 in the form of an ASM. There are therefore two vortex tubes 42, 44 upstream of the ASM 80 in this embodiment.

It should be noted that while the three air separators 42, 44, 80 have been numbered according to there position along the inerting apparatus 30, this should not be construed as limiting. It may equally be considered, for example, that the ASM constitutes a first air separator and the two vortex tubes constitute the second and third air separators, or that the ASM constitutes the second air separator and the two vortex tubes constitute the first and third air separators.

The vortex tubes 42, 44 are both configured differently from the ASM 80 in that they use different working principles. The two vortex tubes 42, 44 are also configured differently from one another in that they are different sizes. More particularly, the vortex tube forming the first air separator 42 is larger in diameter than the vortex tube forming the second air separator 44. The vortex tubes 42, 44 are therefore arranged in order of decreasing diameter from the inlet 30. The diameters of the vortex tubes 42, 44 are selected so that each is tailored to the specific flow rate that it experiences - vortex tube 44 receives less air flow than vortex tube 42 (since vortex tube 42 directs part of that air flow to the second outlet 34 as OEA), so it is correspondingly smaller in diameter so as to maximise the separation it can achieve. Equally, due to the reduction in flow rate the air pressures experienced the each air separators 42, 44, 80 sequentially decreases from the inlet 30.

With there being two vortex tubes 42, 44 upstream of the ASM 80 in this embodiment, the air arriving at the ASM is already quite pure. Accordingly, the loading on the ASM is reduced. The ASM 80 is therefore smaller (and thus lighter, cheaper, etc) than that of the first embodiment.

A fourth embodiment of the invention will now be described with reference to Figure 6, in combination with Figures 1 to 5. The fourth embodiment is similar to the third first embodiment, therefore only the differences will be described and corresponding reference numerals will be used to denote corresponding features.

In the fourth embodiment, each air separator 42, 44, 80 is a vortex tube. The purity of NEA produced in this arrangement renders an ASM (and its associated drawbacks) unnecessary.

In corresponding fashion to the third embodiment, the vortex tubes 42, 44, 80 are configured differently from one another by virtue of reducing in diameter away from the inlet 30. Each vortex tube is tailored to the specific flow rate that it experiences at its specific position in the inerting apparatus 36 (i.e. in the flow sequence of vortex tubes, rather than necessarily its physical location).

The fourth embodiment also differs from the third in that the air source 18 is a cabin air exhaust rather than a compressor, and the inerting system 16 comprises air drying apparatus 82 upstream of the filters 48. The air drying apparatus 82 allows the inerting system 16 to function correctly when receiving particularly humid air from the air source 18, without risk of condensation. In the present embodiment the air drying apparatus 82 forms part of the inerting system 16 but in other embodiments it may be part of the HVAC system of the aircraft 2.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents.

It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

The term 'or' shall be interpreted as 'and/or' unless the context requires otherwise.

## Claims

1. An aircraft enclosure inerting system comprising:
an inlet;
an inerting apparatus configured to receive air from the inlet and separate that air into nitrogen enriched air and oxygen enriched air;
a first outlet configured for fluid communication with at least one enclosure of the aircraft to supply nitrogen enriched air from the inerting apparatus to the at least one enclosure; and
a second outlet configured to exhaust oxygen enriched air from the inerting apparatus,
wherein the inerting apparatus comprises at least first and second air separators which are configured differently to one another.

2. An aircraft enclosure inerting system according to claim 1 wherein the inerting apparatus comprises a third air separator which is configured differently to each of the first and second air separators.

3. An aircraft enclosure inerting system according to claim 1 or claim 2 wherein said air separators are connected together in series.

4. An aircraft enclosure inerting system according to any preceding claim wherein at least one of said air separators is a membrane-based air separation module.

5. An aircraft enclosure inerting system according to any preceding claim wherein at least one of said air separators is a vortex tube or an aircraft enclosure inerting system according to any of claims 1 to 3 wherein each air separator of the inerting system is a vortex tube.

6. An aircraft enclosure inerting system according to claim 5, incorporating claims 3 and 4, wherein the vortex tube is positioned upstream of the air separation module, and optionally wherein the inerting apparatus comprises at least two vortex tubes positioned upstream of the air separation module.

7. An aircraft enclosure inerting system according to claim 5 or claim 6 wherein said vortex tubes differ from one another in size for example said vortex tubes differing from one another in diameter (for example being arranged in order of decreasing diameter from the inlet).

8. An aircraft enclosure inerting system according to any preceding claim further comprising a selectively openable bypass passage arranged to receive air from at least one of the air separators and allow that air to bypass at least one other of the air separators (the bypass passage optionally being arranged to allow air to bypass at least one of said air separators, for example said at least one of said air separators being a membrane-based.air separation module).

9. An aircraft enclosure inerting system according to claim 8 wherein the bypass passage is arranged to deliver air to the first outlet.

10. An aircraft enclosure inerting system according to claim 8 or 9 further comprising a third outlet configured to exhaust partially nitrogen enriched air from the inerting system, the bypass passage being arranged when open to direct air to the third outlet.

11. An aircraft sub-assembly comprising an aircraft enclosure inerting system according to any preceding claim, and the at least one enclosure, optionally wherein the inlet of the aircraft enclosure inerting system is connected to an air source (e.g. such that no cooling apparatus is provided between (a) the air source and (b) the air separator(s) and/or the vortex tube or tubes, if present).

12. An aircraft sub-assembly according to claim 11 further comprising air drying apparatus provided downstream of the air source.

13. An aircraft sub-assembly according to claim 11 or 12 wherein the at least one enclosure includes a fuel tank of the aircraft and/or an enclosure containing a fuel line and/or an enclosure containing power electronics of the aircraft.

14. An aircraft sub-assembly according to any one of claims 11 to 13 wherein the at least one enclosure includes a storage tank and/or a containment enclosure of a fire extinguishing system of the aircraft.

15. An aircraft comprising an aircraft enclosure inerting system according to any one of claims 1 to 10 and/or a sub-assembly according to any one of claims 11 to 14.
